# EUROPEAN PATENT APPLICATION

(11) **EP 1 277 625 A2**
(43) Date of publication of application: **22.01.2003**
(21) Application number: 02015604.8
(22) Date of filing: 15.07.2002
(51) Int. Cl.: B60R 21/16

(54) **Curtain-airbag-module**

(30) Priority: 17.07.2001 DE 10134802
(71) Applicant: Breed Automotive Technology, Inc., Lakeland, FL 33807-3050 (US)
(72) Inventor: Jost, Markus, 65439 Flörsheim (DE)
(74) Representative: Müller-Boré & Partner Patentanwälte

(57) **Abstract**

The invention relates to a curtain airbag module comprising an airbag (2) which in its folded state can be arranged essentially along a region (4) of a vehicle roof, and at least one holding strip (16) which can be arranged in such a manner that it extends from the vehicle roof in an essentially transverse manner to the longitudinal extension of the folded airbag (2) and which, in the unfolding direction (E) of the airbag (2), can be secured to a inner side of the vehicle (12) at a distance from the vehicle roof, so that the airbag (2) can unfold between the holding strip (16) and the inner side of the vehicle (12).

## Description

The invention relates to a curtain airbag module.

Curtain airbag modules are side airbag modules, in which an airbag in its unfolded state extends downwards laterally from a roof beam into the vehicle interior. The unfolded airbag thereby extends essentially over the entire length of the vehicle, preferably from the A pillar to the C pillar along the inner side of the vehicle. Lateral protection is thus provided for a vehicle occupant, whereby the airbag extends essentially between the head of a vehicle occupant and the inner side of the vehicle, i.e. in particular a vehicle side window.

The problem arises with these types of curtain airbag modules that the airbag in its unfolded state is not sufficiently secured at its lower end. There is a risk that in a crash, the vehicle occupant gets caught between airbag and inner side of the vehicle, so that the airbag cannot provide sufficient protection for a vehicle occupant. To solve this problem, a tightening device was described in EP 1 059 209 A2, for instance, which secures or tensions the airbag in the region of its lower end. To this effect a tightening cord is used, which is deflected around deflection elements several times and tensions itself during the unfolding of the airbag, to secure the latter in the region of its lower ends. This arrangement is very costly, since various deflection points must be foreseen in the vehicle and on the airbag. This increases manufacturing and assembly costs for the airbag module and involves additional source of error, which jeopardises a secure unfolding of the airbag.

It is therefore the object of the invention to provide a curtain airbag module that in a simple manner enables a simple and safe securing of the unfolded or inflated airbag.

This object is achieved by a curtain airbag module with the characterising features of claim 1. Preferred embodiments arise from the corresponding subclaims.

In the curtain airbag module according to the invention, an airbag can be arranged in its folded or bundled up state essentially along a region of a vehicle roof. The folded airbag can preferably be arranged along a lateral roof beam, so that it extends preferably from the A pillar to the C pillar of the vehicle. In a crash the airbag is inflated with gas by a gas generator and unfolds from the vehicle roof. The unfolding direction of the airbag is in this case preferably essentially downwards, so that the inflated or unfolded airbag extends laterally into the vehicle interior essentially parallel to the inner side of the vehicle. In addition the airbag module according to the invention comprises at least one holding strip, which can be arranged in the vehicle in such a manner that it extends from the vehicle roof essentially transverse to the longitudinal extension of the folded airbag. The extension direction of the holding strip thus corresponds essentially to the unfolding direction of the airbag. In the unfolding direction of the airbag, the holding strip can be secured to an inner side of the vehicle at a distance from the vehicle roof. In the installed state, the holding strip is secured on the one hand in the region of the vehicle roof and on the other hand to the inner side of the vehicle so that the fixing points of the holding strip are spaced apart from each other, preferably to a lateral body part. The holding strip is arranged in such a manner that the airbag, when it is inflated with gas, can unfold between the holding strip and an inner side of the vehicle. The length of the holding strip in this case is preferably selected so that the airbag in its unfolded or inflated state lies tightly against the holding strip. The airbag is clamped between the inner side of the vehicle and the holding strip, so that the airbag is safely and tightly secured to the vehicle side by the holding strip. In particular, the region of the lower end of the airbag is securely held on the vehicle side, so that a vehicle occupant cannot get caught between the airbag and inner side of the vehicle. The airbag is preferably secured to the holding strip with a non-interlocking contact fit. In addition, engagement elements can be provided on the airbag and the holding strip, which ensure an interlocking between airbag and holding strip. The holding strip can for instance be roughened. The holding strip is preferably made out of synthetic material in the form of a fabric strip. The holding strip is preferably small comparable with a string or a cord. Other materials, however, in particular fabrics, can be used.

The holding strip is preferably secured with its first end to the vehicle roof and with its second opposite end it can be secured to the inner side of the vehicle at a distance to the vehicle roof. In this way, between the holding strip and the inner side of the vehicle an enclosed region is created, into which the airbag can unfold. In the unfolded state of the airbag, the holding strip lies against the side of the airbag that is turned towards the vehicle interior, i.e. towards a vehicle occupant. With its opposite side, the airbag preferably lies against a part of the inner side of the vehicle or vehicle inner trim (covering). In this way the airbag can be safely secured between the holding strip and the inner side of the vehicle.

In a preferred embodiment the holding strip is designed as a loop, the two ends of which can be secured to the vehicle roof, whereby one side of the loop can be secured at least to a particular point of the inner side of the vehicle, at a distance from the vehicle roof, so that the airbag can be unfolded into the loop. In the unfolded or inflated state of the airbag, the latter thus preferably lies completely against the inner side of the loop. Since the loop is secured to one side on the inner side of the vehicle, i.e. to the side turned towards the vehicle outer side, the airbag is thus safely secured to the inner side of the vehicle. The region of the lower end or the lower edge of the airbag is thus safely secured. The loop is in this case preferably arranged in such a manner that it can be secured to the inner side of the vehicle to a point in the region of its lower end, i.e. to its end opposite the vehicle roof. Alternatively, the loop can also be secured with an entire side to the inner side of the vehicle. This can take place in an extensive manner or by several fastening points. In this case, merely the side of the loop which is turned towards the vehicle interior remains movable.

The holding strip can preferably be secured to the inner side of the vehicle to a fastening point, at a distance from the vehicle roof which corresponds essentially to the extent of the unfolded airbag in its unfolding direction. Such an arrangement has the advantage that the fastening point is arranged in the proximity of the lower end of the unfolded or inflated airbag, so that this end of the airbag can be safely secured to the vehicle side.

The airbag and the holding strip advantageously comprise a common fastening point for the fastening to the vehicle roof. This configuration facilitates the assembly of the airbag module according to the invention, since the airbag and the holding strip can be secured to the common fastening point on the vehicle roof in one single working cycle. The airbag and the holding strip are thus secured preferably in the region of a lateral roof beam to the inner side of the vehicle body. Preferably the holding strip can be arranged in its unfolded state below an interior trim member of the vehicle. The holding strip can thus be arranged in the vehicle in such a manner that, in the installed state, when the airbag is not unfolded, it lies invisibly behind a vehicle interior trim member. Only in the event of a crash, when the airbag is inflated with gas, does the holding strip emerge from the vehicle interior trim, to enable the airbag to unfold into the space between the holding strip and the inner side of the vehicle. The airbag is in this case is secured between the holding strip and the inner side of the vehicle, i.e. the inner side of the vehicle body or the vehicle interior trim.

It is furthermore preferred that the interior trim has at least one set breaking point, enabling an ejection of the holding strip during the unfolding of the airbag. The set breaking point enables the interior trim to tear or break open. In this case the interior trim opens preferably along a line in the extension direction of the holding strip, so that at least one gap is formed, through which the holding strip can emerge essentially with its entire length into the vehicle interior. This tearing open and emergence of the holding strip can occur due to the force created by the airbag during its unfolding. When the airbag is inflated with gas, it expands and also tensions the surrounding holding strip, so that the latter is pulled or ripped out of the vehicle interior trim, so that the airbag can unfold into the space between the holding strip and the vehicle interior trim.

The holding strip can be connected to the folded airbag by at least one tear seam, which tears open during the unfolding of the airbag. Due to this arrangement the holding strip is safely secured during the folded state of the airbag, so that it is not freely movable. In addition, the assembly is simplified, since the holding strip can be secured in a predetermined position to the airbag even before the installation in a vehicle, so that it can be installed into a vehicle together with the airbag. The holding strip is preferably secured to the airbag in an upper region of the vehicle in the proximity of the vehicle roof. The holding strip is preferably connected to a front region of the airbag as seen in the unfolding direction, by the tear seam. During the unfolding of the airbag, the front region or section of the airbag in the unfolding direction moves away from the vehicle roof in a downward direction, whereby this region tears off from the holding strip.

The holding strip can preferably be arranged in the region of a roof pillar of the vehicle. This roof pillar can for instance constitute the B pillar or in particular the C pillar of a motor vehicle. In particular a middle or rear end of the airbag, as seen in the driving direction of the vehicle, can be safely secured to the inner side of the vehicle.

It is furthermore preferable that the holding strip can arranged in such a manner that it extends essentially parallel to the roof beam. In this case the holding strip extends in the installed state along the roof pillar, preferably along the side turned towards the vehicle interior. The holding strip can be arranged under the interior trim of the roof pillar.

The invention will be described in more detail with reference to the figures, in which:
Fig. 1 is a side view of a curtain airbag module according to the invention;
Fig. 2 is a sectional representation of the folded airbag and holding strip in a resting position;
Fig. 3 is a further embodiment with a common fastening point for airbag and holding strip, and
Fig. 4 is a sectional representation of the unfolded airbag with holding strip.

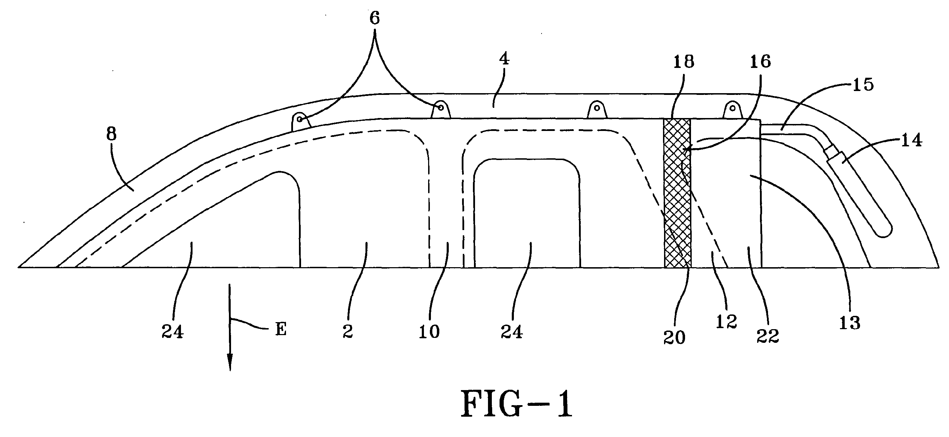

In Fig. 1 the airbag 2 is shown in its unfolded, i.e. inflated or gas-inflated state. The airbag 2 extends from a lateral roof region or roof beam 4 of a motor vehicle. The airbag 2 is secured with its upper end to fastening points 6 on the roof beam 4. The unfolded airbag 2 extends essentially parallel along the roof beam 4, from A pillar 8 of the vehicle, via the B pillar 10 to the region of the C pillar 12 of the vehicle. At its rear end 13, i.e. the rear end as seen in the driving direction of the vehicle, the airbag 2 is connected to a gas generator 14 by a gas supply line.

In the region of the C pillar 12 the holding strip 16 is arranged. The holding strip extends downwards from the roof beam 4 essentially transversely or perpendicularly to the latter. The holding strip 16 is in this case secured with its upper end 18 to the roof beam 4. The lower end 20 of the holding strip 16 is secured to the C pillar 12 in the unfolding direction E at a distance to the roof beam 4. The fastening point of the lower end 20 on the C pillar 12 is essentially distanced from the roof beam 4 to the extent that the distance between the roof beam 4 and the lower end 20 of the holding strip 16 corresponds essentially to the extension of the unfolded airbag 2 in the unfolding direction E of the airbag 2. The unfolded airbag 2 lies between the holding strip 16 and the inner side of the vehicle, i.e. in particular the vehicle interior trim. A rear end 13 of the airbag is in this case secured between the holding strip 16 and the C pillar 12. The length of the holding strip 16 is selected so that the airbag 2 in its inflated or blown-up state essentially fills the space between the holding strip 16 and the C pillar 12. The airbag 2 is in this way securely pushed against the inner side of the holding strip 16, whereby it is secured to the holding strip 16 in a non-interlocking contact fit due to the friction between the airbag 2 and the holding strip 16. A fastening thus takes place also in a horizontal direction, i.e. perpendicular to the unfolding direction E, so that the airbag 2 cannot slip on the holding strip 16. For an improved fastening, corresponding engagement elements can be provided in addition on the holding strip 16 and/or the airbag 2, enabling an engagement between the holding strip 16 and the airbag 2. Since the lower end 20 of the holding strip 16 is secured to the C pillar 12, the airbag 2 in the region of its lower edge 22 is also safely secured to the C pillar 12 in its unfolded state. The airbag 2 shown here comprises additional tucks (or darts) 24, which are not inflated with gas.

Even if in Fig. 1 the arrangement of the holding strip 16 is shown in the region of the C pillar 12 of a vehicle, the arrangement of the holding strip 16 according to the invention is also additionally or alternatively possible in the region of the B pillar 10 or on another suitable side part of a motor vehicle.

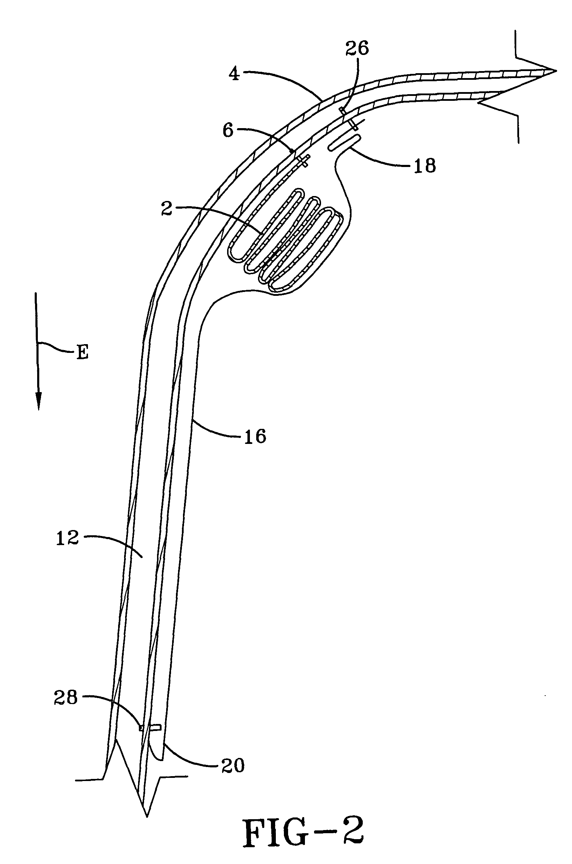

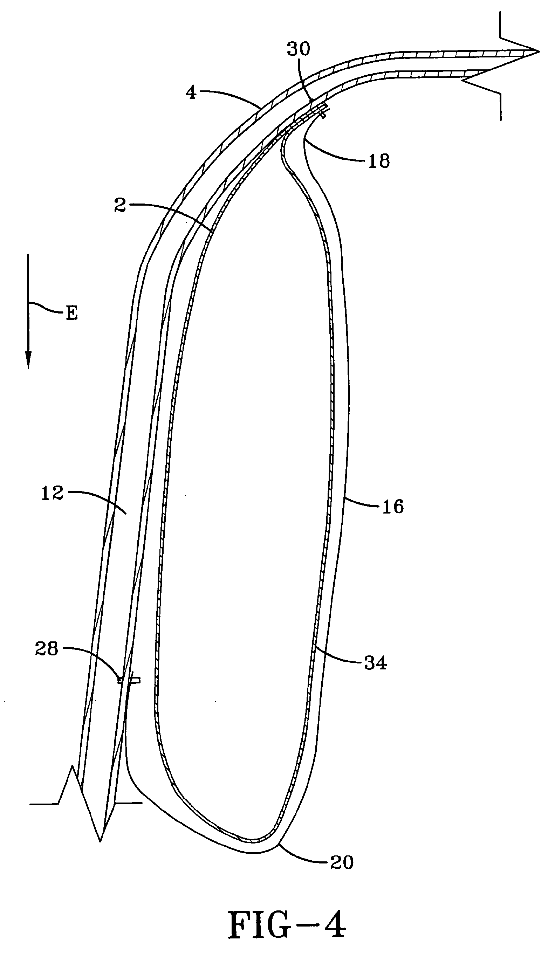

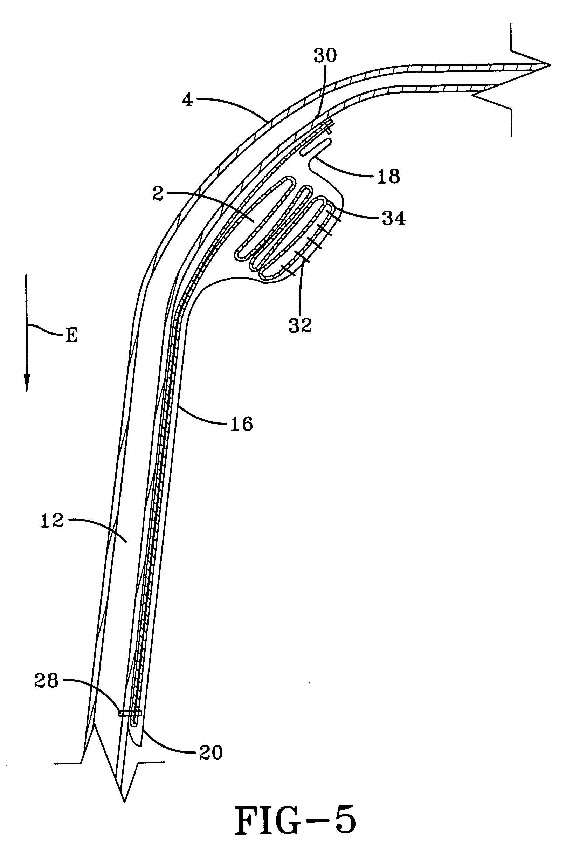

Fig. 2 shows a side view of the folded airbag 2 with the holding strip 16. In the region of a roof beam 4, i.e. essentially in the region of the transition from vehicle side to vehicle roof, the airbag 2 is connected to the vehicle body via the fastening point 6. The airbag is folded in such a manner that it forms a parcel which is arranged essentially beneath and along the roof beam 4. The holding strip 16 extends on the inner side of the vehicle body essentially parallel to a roof pillar 12, for instance the C pillar of a motor vehicle. The holding strip 16 is secured at its upper end 18 in a fastening point 26 to the vehicle body, i.e. in particular to the roof beam 4. This fastening, like the fastening of the airbag 2, can be carried out at the fastening points 6, for instance by screws, rivets or clipping on of corresponding connection elements. The lower end 20 of the holding strip 16 is connected at a fastening point 28 to the roof pillar 12. The fastening point 28 is essentially distanced from the fastening points 6 and 26 to the extent that the distance essentially corresponds to the extent of the unfolded airbag 2 in its unfolding direction E. In the folded state of the airbag 2 the holding strip 16 lies essentially against the roof pillar 12, whereby it can for instance be arranged below a vehicle interior trim (not represented). It continues via the parcel of the folded airbag 2 to the fastening point 26. It therefore lies close to the vehicle or body inner side and the folded airbag 2. In the unfolded state of the airbag 2, the latter extends between the holding strip 16 and the roof beam 12, as shown in Fig. 4.

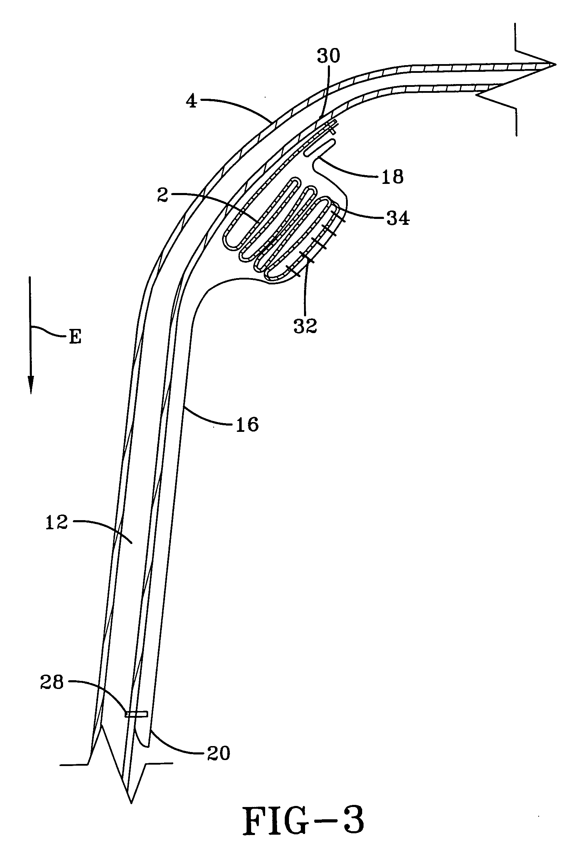

Fig. 3 shows an alternative embodiment to the arrangement shown in Fig. 2. The arrangement according to Fig. 3 differs from the arrangement of Fig. 2 in that the airbag 2 and the holding strip 16 are secured on the vehicle body in the region of the roof beam 4 in a common fastening point 30. This simplifies the assembly of the airbag 2 and the holding strip 16 in the vehicle. In addition the holding strip 16 and the airbag 2 can already be secured to each other in the region of the fastening point 30, before the airbag 2 and the holding strip 16 are then secured to the fastening point 30 in the vehicle. In addition, the holding strip 16 is connected to the airbag 2 in the region of its upper end 18 by tear seams 32. The tear seams 32 connect the holding strip 16 to the front section 34 of the airbag. The front section 34 of the airbag 2 constitutes the section which in the unfolding direction E during the unfolding of the airbag 2 lies at the front and forms the lower edge 22. The front end 34 of the airbag 2 therefore lies in the unfolded or inflated state of the airbag 2 in the proximity of the fastening point 28, as shown in Fig. 4. The arrangement of the tear seams 32 is not limited to the embodiment shown in Fig. 3, but it can also be foreseen for example with the embodiment shown in Fig. 2. The tear seams 32 enable a more simple and improved arrangement of the holding strip 16 with the folded airbag 2 in a vehicle.

Fig. 4 is a sectional view of the unfolded airbag 2 with the holding strip 16 according to the embodiment of Fig. 3. The unfolded state of the airbag 2 of the embodiment shown in Fig. 2 is essentially identical and differs from Fig. 4 only in terms of the separate fastening points 6 and 26. The inflated, i.e. blown-up airbag 2 extends from the roof beam 4 essentially parallel to the latter and the roof pillar 12. The airbag 2 in this case extends between the roof pillar 12 and the holding strip 16, whereby it essentially fills out the enclosed space between roof pillar 12 and holding strip 16. The airbag 2 and the holding strip 16 thus essentially form a non-interlocking contact fit, so that the airbag is secured to the holding strip 16. Alternatively or additionally, a non-interlocking and/or interlocking contact with the roof pillar 12 or a corresponding section of the inner side of the vehicle can be achieved to secure the airbag 2 to the inner side of the vehicle or the roof pillar 12. The front section 34 of the airbag 2 in this case also comes into contact with the holding strip 16 in the region of the lower end 20. This way the front section 34 of the airbag 2 is secured via the fastening point 28 by the holding strip 16 to the roof pillar 12. The front end 34 of the airbag 2 can thus no longer detach itself from the roof pillar 12 into the interior of the vehicle. This way it is avoided that a vehicle occupant gets caught between the inflated airbag 2 and the inner side of the vehicle, for instance the roof pillar 12 or a side window pane. The fastening of the holding strip 16 to the fastening point 28 can be carried out for instance by screws, rivets or clipping on of suitable fastening elements. Alternatively to the shown and described embodiments, the holding strip 16 can be designed as a closed loop, the two ends of which are connected with the car body to the fastening point 26 or 30 on the roof beam 4. Then a region of the loop corresponding to the lower end 20 is connected with the roof pillar 12 at the fastening point 28, so that furthermore a front end 34 of the airbag 2, which in the unfolded state forms the lower edge 22 of the latter, can be secured to the roof pillar 12 at a distance to the roof beam 4.

## Claims

1. Curtain airbag module comprising an airbag (2) which in its folded state can be arranged essentially along a region (4) of a vehicle roof, and at least one holding strip (16) which can be arranged in such a manner that it extends from the vehicle roof in an essentially transverse manner to the longitudinal extension of the folded airbag (2) and which, in the unfolding direction (E) of the airbag (2), can be secured to a inner side of the vehicle (12) at a distance from the vehicle roof, so that the airbag (2) can unfold between the holding strip (16) and the inner side of the vehicle (12).

2. Curtain airbag module according to claim 1, in which the holding strip (16) can be secured with its first end (18) to the vehicle roof and with its second opposite end (20) to the inner side of the vehicle (12) at a distance from the vehicle roof.

3. Curtain airbag module according to claim 1, in which the holding strip (16) is designed as a loop, the two ends of which can be secured to the vehicle roof, whereby one side of the loop can be secured at least to a particular point of the inner side of the vehicle (12), at a distance from the vehicle roof, so that the airbag (2) can be unfolded into the loop.

4. Curtain airbag module according to one of the preceding claims, in which the holding strip (16) can be secured to the inner side of the vehicle (12) to a fastening point (28), at a distance from the vehicle roof which corresponds essentially to the extent of the unfolded airbag (2) in its unfolding direction (E).

5. Curtain airbag module according to one of the preceding claims, in which the airbag (2) and the holding strip (16) comprise a common fastening point (30) for the fastening to the vehicle roof.

6. Curtain airbag module according to one of the preceding claims, in which the holding strip (16) in the folded state can be arranged beneath an interior trim of the vehicle.

7. Curtain airbag module according to claim 6, in which the interior trim comprises at least one set breaking point, enabling an ejection of the holding strip (16) during the unfolding of the airbag (2).

8. Curtain airbag module according to one of the preceding claims, in which the holding strip (16) is connected to the folded airbag (2) by at least one tear seam (32), which tears open during the unfolding of the airbag (2).

9. Curtain airbag module according to one of the preceding claims, in which the holding strip (16) can be arranged in the region of a roof pillar (12) of the vehicle.

10. Curtain airbag module according to claim 9, in which the holding strip (16) can be arranged in such a manner that it extends essentially parallel to the roof pillar (12).
